# FASCICULE DE BREVET EUROPEEN

(11) **EP 0 844 711 B1**
(45) Date de publication et mention de la délivrance du brevet: **26.01.2005**
(21) Numéro de dépôt: 97402747.6
(22) Date de dépôt: 17.11.1997
(51) Int. Cl.: H02B 1/46, H02B 1/48

(54) **Corps de boîte à point d'ancrage incorporé, en particulier embase pour tableau d'abonné**
Gehäusekörper mit integriertem Verankerungspunkt, insbesondere ein Unterteil für eine Zählertafel
Box incorporating a fixation point, especially base for a meter board

(30) Priorité: 26.11.1996 FR 9614438
(43) Date de publication de la demande: 27.05.1998
(73) Titulaire: LEGRAND, 87000 Limoges (FR); LEGRAND SNC, 87000 Limoges (FR)
(72) Inventeur: Araujo, Fernand, 87350 Panazol (FR); Boijoux, Guy, 87920 Condat Sur Vienne (FR); Combas, Christian, 87240 Ambazac (FR)
(74) Mandataire: Santarelli

(56) Documents cités:
- DE-A- 3 013 750
- DE-U- 6 908 061
- FR-A- 2 670 625
- US-A- 3 312 873

## Description

La présente invention concerne d'une manière générale les corps de boîte, c'est-à-dire les conteneurs comportant par essence au moins deux parois, à savoir une paroi de fond et une paroi latérale, que le contour de cette paroi latérale soit polygonal ou qu'il soit courbe.

Elle vise plus particulièrement, mais non nécessairement exclusivement, le cas où un tel corps de boîte est une embase pour tableau d'abonné, suivant des dispositions décrites dans le brevet FR-A1-2 722 344.

Outre l'embase ainsi formée d'un tel corps de boîte, le tableau d'abonné concerné, qui est du type de ceux destinés à être mis en place au domicile d'un abonné à un réseau de distribution électrique, comporte une platine, qui ferme l'embase à la manière d'un couvercle, et qui, communément appelée platine de branchement, porte au moins un appareil électrique, en l'espèce un disjoncteur, auquel il peut cependant être adjoint un compteur.

Dans le volume interne de l'embase doivent transiter divers câbles, et, notamment, des câbles d'arrivée, en provenance du réseau.

A ce jour, il n'est prévu aucun point d'ancrage pour ces câbles.

Il en résulte des difficultés de câblage, le maintien des câbles n'étant pas assuré pendant les opérations nécessaires au raccordement des appareils électriques concernés.

Il en résulte, également, des difficultés de mise en oeuvre, les câbles, ainsi foisonnant, pouvant constituer une gêne lors de la mise en place de la platine sur l'embase.

Enfin, alors confinés par cette platine, les câbles peuvent intempestivement soumettre celle-ci à des efforts pour lesquels elle n'est normalement pas prévue.

Il apparaît donc souhaitable de pouvoir disposer, dans l'embase, d'au moins un point d'ancrage permettant la mise en oeuvre d'un quelconque moyen propre à assurer un maintien satisfaisant des câbles.

Le document US-A-3 312 873 décrit un corps de boîte comportant une paroi de fond et une paroi latérale dans lequel, en saillie sur la surface interne de la paroi de fond, sont prévus des bossages, d'un seul tenant avec cette paroi, munis d'un trou taraudé destiné à recevoir des vis pour la fixation d'un appareil.

La difficulté, dans l'établissement d'un tel point d'ancrage, tient, d'une part, à ce que, qu'il soit utilisé ou non, ce point d'ancrage doit préserver au mieux l'intégrité de l'embase, pour permettre à celle-ci de satisfaire les dispositions normatives en vigueur en matière d'indice de protection et d'isolement, et, d'autre part, à ce que, pour l'utilisation de ce point d'ancrage, il est possible de n'intervenir que de l'intérieur de l'embase.

La présente invention a d'une manière générale pour objet une disposition permettant de surmonter de manière simple et économique cette difficulté.

De manière plus précise, elle a tout d'abord pour objet un corps de boîte, du genre comportant une paroi de fond et une paroi latérale, caractérisé en ce qu'il présente, en saillie sur la surface interne de l'une quelconque de ces parois, au moins une bride, qui est d'un seul tenant avec cette paroi, et qui définit avec celle-ci un passage, avec, d'une part, dans la paroi, au droit de la bride, un ajour qui, pour le moulage de cette bride, évide localement cette paroi, et, d'autre part, sur chacun des flancs latéraux de la bride, un voile, qui occulte le passage formé par cette bride, et qui est à éliminer pour la libération de ce passage ; elle a encore pour objet tout tableau d'abonné dont l'embase est formée par un corps de boîte de ce type.

Le mot "bride" doit ici être entendu au sens large d'une quelconque attache ou d'un quelconque lien.

Il peut en effet s'agir aussi bien d'une bride en forme générale d'arceau, cette bride se raccordant alors à chacune de ses extrémités à la paroi sur laquelle elle fait saillie, qu'une bride en forme générale de potence, cette bride ne se raccordant alors à cette paroi qu'à l'une de ses extrémités.

Quoi qu'il en soit, la bride suivant l'invention constitue par elle-même un point d'ancrage propre à la mise en oeuvre d'un quelconque autre lien, par exemple un collier de serrage, de nature à assurer un maintien convenable des câbles à confiner.

Si cette bride n'est pas utilisée, les voiles qui en occultent le passage, et qui, par conséquent, occultent également l'ajour à la faveur duquel elle a été moulée, permettent au corps de boîte de conserver l'indice de protection et d'isolement qui est le sien.

Il en demeure ainsi même si, suivant une disposition particulière de l'invention, ces voiles sont, à leur base, chacun isolés de la paroi concernée par une fente de nature à en faciliter l'élimination.

Il suffit, en effet, que la largeur de cette fente soit inférieure au diamètre du doigt d'épreuve correspondant à l'indice de protection et d'isolement requis.

Si, par contre, la bride suivant l'invention est utilisée, le lien dont elle permet la mise en place en occulte alors suffisamment le passage pour que cet indice de protection et d'isolement soit encore respecté.

Outre le maintien des câbles qu'elle permet, avec les facilités de câblage et de mise en oeuvre et le ménagement de la platine auxquels conduit ce maintien, la bride suivant l'invention se satisfait, avantageusement, pour la constitution du lien propre à ce maintien, de la mise en oeuvre d'un collier de serrage de type courant, qui, préférentiellement, est fourni avec le corps de boîte formant l'embase, et qui est avantageusement susceptible d'être remplacé si nécessaire.

Enfin, venant de moulage avec le corps de boîte, la bride suivant l'invention, qui, préférentiellement, est jumelée avec une autre bride de même type pour un meilleur ancrage du lien à mettre en oeuvre, n'implique avantageusement aucun frais sensible pour sa réalisation, et sa mise en oeuvre est avantageusement particulièrement aisée.

Les caractéristiques et avantages de l'invention ressortiront d'ailleurs de la description qui va suivre, à titre d'exemple, en référence aux dessins schématiques annexés sur lesquels :
la figure 1 est, avec un arrachement local, une vue en perspective, vu de l'avant, d'un tableau d'abonné dont l'embase est formée par un corps de boîte suivant l'invention ;
la figure 2 est une vue en perspective de ce corps de boîte, vu de l'arrière ;
la figure 3 reprend, à échelle supérieure, le détail de la figure 1 repéré par un encart III sur cette figure 1 ;
la figure 4 reprend, à l'échelle de la figure 3, le détail de la figure 2 repéré par un encart IV sur cette figure 2 ;
les figures 5 et 6 sont des vues partielles en coupe de la paroi de fond du corps de boîte suivant l'invention, suivant chacune respectivement les lignes V-V et VI-VI de la figure 3 ;
la figure 7 reprend, à échelle supérieure, le détail de la figure 5 repéré par un encart VII sur cette figure 5 ;
la figure 8 est une vue de détail analogue à celle de la figure 3, après élimination des voiles occultant initialement le passage d'une bride suivant l'invention ;
la figure 9 est une vue en perspective, qui, reprenant pour partie celle de la figure 1, illustre la mise en place d'un collier de serrage après cette élimination ;
la figure 10 est une vue en perspective, qui, analogue à celle de la figure 3, se rapporte à une variante de réalisation ;
la figure 11 est, à la manière de la figure 6, une vue en coupe de cette variante de réalisation, suivant la ligne Xl-Xl de la figure 10 ;
la figure 12 est une vue en perspective, qui, analogue à celle de la figure 9, illustre la mise en oeuvre de cette variante de réalisation ;
la figure 13 est une vue en perspective qui, analogue, elle aussi, à celle de la figure 3, se rapporte à une autre variante de réalisation ;
la figure 14 est une vue en coupe de cette dernière variante de réalisation, suivant la ligne XIV-XIV de la figure 3.

Ces figures illustrent, à titre d'exemple, l'application de l'invention à un tableau d'abonné 10 du type de celui faisant l'objet du brevet FR-A1-2 722 344 mentionné ci-dessus.

Ce tableau d'abonné 10 ne relevant pas par lui-même de la présente invention, il ne sera pas décrit dans tous ses détails ici.

Seuls en seront décrits les éléments nécessaires à la compréhension de l'invention.

Il suffira, à ce sujet, de préciser qu'il comporte, d'une part, un corps de boîte 11, qui en forme l'embase, et une platine 12, qui ferme ce corps de boîte 11 à la manière d'un couvercle et qui est apte à porter un ou plusieurs appareils électriques non représentés.

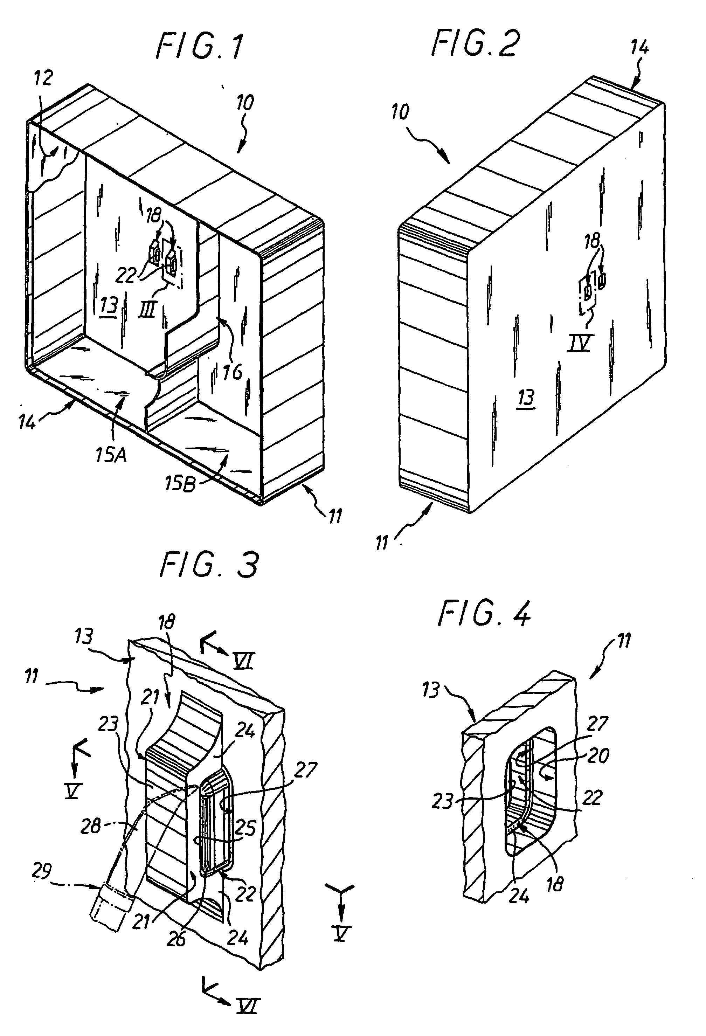

Pour la même raison que précédemment, ni le corps de boîte 11 ni la platine 12 ne seront décrits en détail ici, et c'est d'ailleurs pourquoi, d'une part, il n'a été donné qu'une représentation simplifiée du corps de boîte 11 sur les figures 1 et 2, et pourquoi, d'autre part, la platine 12 n'apparaît que partiellement sur la seule figure 1.

De manière connue en soi, le corps de boîte 11 comporte une paroi de fond 13, et, à la périphérie de celle-ci, une paroi latérale 14, qui s'étend sensiblement perpendiculairement à la paroi de fond 13, et qui, dans la forme de réalisation représentée, a un contour polygonal, et, plus précisément, rectangulaire.

De manière également connue en soi, le volume interne du corps de boîte 11 est fractionné en deux compartiments ou domaines 15A, 15B par une cloison interne 16, qui, suivant un parcours plus ou moins sinueux, s'étend de l'un à l'autre de deux côtés opposés de la paroi latérale 14, à savoir, un compartiment ou domaine d'arrivée 15A dans lequel sont susceptibles de transiter des câbles d'arrivée non représentés, et un compartiment ou domaine de départ 15B dans lequel sont susceptibles de transiter des câbles de départ également non représentés.

Pour les détails correspondants, il suffit de se reporter au brevet FR-A1-2 722 344.

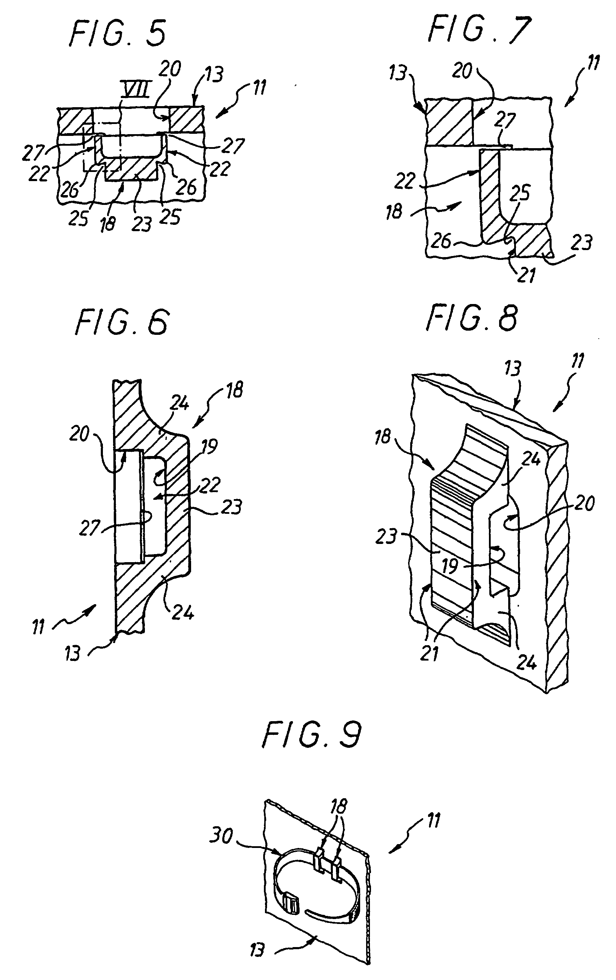

Suivant l'invention, le corps de boîte 11 présente, en saillie sur la surface interne de l'une quelconque de ses parois 13, 14, au moins une bride 18, qui est d'un seul tenant avec cette paroi 13, 14, en venant de moulage d'une seule pièce avec celle-ci, et qui définit avec cette paroi 13, 14, ainsi qu'il est plus apparent sur la figure 8, un passage 19, avec, d'une part, dans la paroi 13, 14 concernée, au droit de cette bride 18, un ajour 20 qui, pour le moulage de cette bride 18, évide localement de part en part cette paroi 13, 14, et, d'autre part, sur chacun des flancs latéraux 21 de la bride 18, et ainsi qu'il est plus apparent pour l'un d'eux sur la figure 3, un voile 22, qui occulte le passage 19 formé par cette bride 18, et qui est à éliminer pour la libération de ce passage 19.

Préférentiellement, et cela est le cas dans les formes de réalisation représentées, la paroi 13, 14 du corps de boîte 11 présentant ainsi en saillie sur sa surface interne au moins une bride 18 en est la paroi de fond 13.

Dans la forme de réalisation plus particulièrement représentée sur les figures 1 à 9, il y a ainsi, en saillie, sur la surface interne de cette paroi de fond 13, deux brides 18, qui, disposées à distance l'une de l'autre, s'étendent parallèlement l'une à l'autre et sont identiques l'une à l'autre.

Dans les formes de réalisation représentées, les brides 18 interviennent dans le compartiment ou domaine d'arrivée 15A.

Dans la forme de réalisation plus particulièrement représentée sur les figures 1 à 9, les deux brides 18 mises en oeuvre sont chacune en forme générale d'arceau, ou d'anse.

Autrement dit, ces brides 18 se raccordent chacune à chacune de leurs extrémités à la paroi 13, 14, en l'espèce la paroi de fond 13, sur laquelle elles font saillie.

Elles présentent donc chacune une partie médiane 23 et deux jambages latéraux 24.

Dans la forme de réalisation représentée, la partie médiane 23 s'étend sensiblement parallèlement à la paroi de fond 13, avec des surfaces interne et externe planes.

De même, la surface interne des jambages latéraux 24 est sensiblement plane, et elle s'étend sensiblement perpendiculairement à la surface interne de la partie médiane 23 et à la paroi de fond 13.

Le passage 19 que chacune des brides 18 définit avec cette paroi de fond 13 a, donc, en section transversale, dans la forme de réalisation représentée, un contour globalement rectangulaire.

Par contre, dans la forme de réalisation représentée, la surface externe des jambages latéraux 24 est largement arrondie, et concave, en cylindre, pour se raccorder sensiblement tangentiellement à la paroi de fond 13.

Dans la forme de réalisation représentée, le voile 22 présent sur chacun des flancs latéraux 21 d'une bride 18 est en saillie sur ce flanc latéral 21.

Préférentiellement, et cela est le cas dans la forme de réalisation représentée, à la jonction entre ce voile 22 et le flanc latéral 21 sur lequel il intervient, il est prévu, au moins localement, une rainure de guidage 25, pour faciliter l'élimination de ce voile 22.

Dans la forme de réalisation représentée, cette rainure de guidage 25 s'étend parallèlement à la paroi de fond 13, du côté du voile 22 opposé à cette paroi de fond 13.

Par exemple, et tel que représenté, cette rainure de guidage 25 est formée, d'une part, par le flanc latéral 21 concerné de la bride 18, et, d'autre part, par un bourrelet 26 que le voile 22 présente en saillie sur sa tranche, parallèlement à ce flanc latéral 21, et qui, en quelque sorte, prolonge localement ce voile 22, en direction opposée à la paroi de fond 13.

Pour des questions de commodité de moulage, ce bourrelet 26, et avec lui la rainure de guidage 25, ne s'étendent que sur une portion de la longueur du côté concerné du voile 22, dans la zone médiane de ce côté.

Dans la forme de réalisation représentée, le bourrelet 26 a, en section transversale, un profil triangulaire, avec, du côté opposé au flanc latéral 21 de la bride 18, une surface droite en continuité avec celle du voile 22, et, du côté de ce flanc latéral 21, une surface oblique, pour élargir de ce côté la rainure de guidage 25.

Préférentiellement, et cela est le cas dans la forme de réalisation représentée, chacun des voiles 22 associés à une bride 18 est, à sa base, isolé de la paroi de fond 13 par une fente 27, qui, à l'image de cette base, se raccorde au flanc latéral 21 correspondant de la bride 18 à chacune de ses extrémités.

Cette fente 27, qui, comme la rainure de guidage 25, est destinée à faciliter l'élimination du voile 22, a une largeur suffisamment réduite pour que soit respecté l'indice de protection et d'isolement requis.

Ainsi donc, les brides 18 prévues suivant l'invention ne nuisent pas par elles-mêmes à cet indice de protection et d'isolement.

Pour la mise en oeuvre de ces brides 18, il suffit d'éliminer chacun des voiles 22 qui les flanquent.

Tel que schématisé en traits interrompus sur la figure 3 pour l'un de ces voiles 22, cette élimination peut aisément se faire à l'aide de la lame 28 d'un couteau 29, en prenant appui par cette lame 28 sur le flanc latéral 21 concerné d'une telle bride 18, et en lui faisant suivre la rainure de guidage 25 correspondante.

Ainsi qu'on le notera, grâce à la saillie que forme le voile 22 sur le flanc latéral 21 sur lequel il intervient, d'une part, et à la fente 27 qui, à sa base, l'isole de la paroi de fond 13, d'autre part, l'opération à effectuer pour l'élimination de ce voile 22 se fait avantageusement frontalement, c'est-à-dire sensiblement perpendiculairement à la paroi de fond 13.

Elle est donc avantageusement aisée à conduire.

Une fois leur passage 19 dégagé, les brides 18 peuvent avantageusement être mises à profit pour l'ancrage à la paroi de fond 13 d'un collier de serrage 30, comme représenté sur la figure 9.

Il suffit d'engager successivement ce collier de serrage 30 dans le passage 19 de chacune de ces brides 18.

En occultant ainsi le passage 19 des brides 18, le collier de serrage 30 permet la conservation de l'indice de protection et d'isolement.

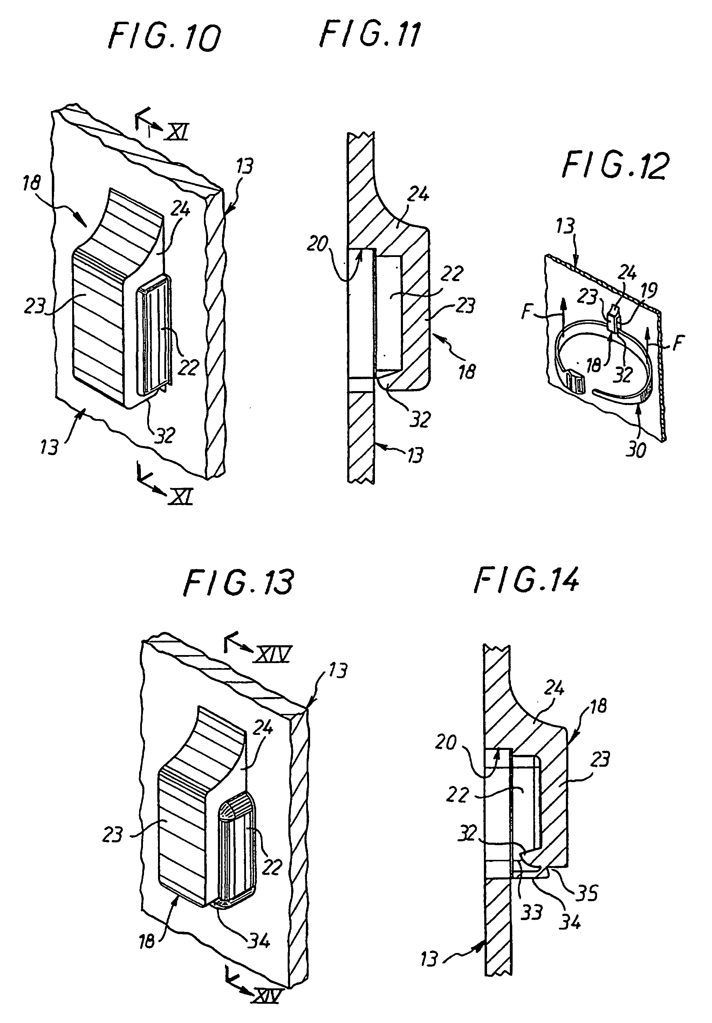

Suivant les formes de réalisation représentées, à titre de variantes, sur les figures 10 à 14, seule est prévue une bride 18, et celle-ci, en forme générale de potence, ne se raccorde qu'à l'une de ses extrémités à la paroi 13, 14, en l'espèce la paroi de fond 13, sur laquelle elle fait saillie.

Autrement dit, dans ces formes de réalisation, la bride 18 suivant l'invention ne comporte qu'un jambage latéral 24, et sa partie médiane 23 s'étend en porte à faux à compter de l'extrémité libre de celui-ci.

Préférentiellement, et cela est le cas dans l'une et l'autre des formes de réalisation représentées, la bride 18 présente, à son extrémité libre, c'est-à-dire à l'extrémité libre de sa partie médiane 23, au lieu et place d'un jambage latéral 24, un bord tombé 32, qui s'étend en direction de la paroi 13, 14 sur laquelle elle fait saillie, et, donc, en l'espèce, en direction de la paroi de fond 13.

Dans la forme de réalisation plus particulièrement représentée sur les figures 10 à 12, ce bord tombé 32, qui est sensiblement perpendiculaire à la partie médiane 23, s'étend au plus près de la paroi de fond 13, en affleurant sensiblement au niveau de celle-ci.

Du fait de la proximité du bord tombé 32 par rapport à la paroi de fond 13, l'indice de protection et d'isolement requis est encore respecté.

Pour le reste, les dispositions sont du même type que celles précédemment décrites.

Comme précédemment, également, la mise en oeuvre de la bride 18 se fait en éliminant les voiles 22 de ses flancs latéraux 21, pour la libération du passage 19 qu'elle forme.

Mais, au lieu de se faire par un engagement latéral, comme précédemment, la mise en place du collier de serrage 30 peut se faire par un engagement frontal, tel que schématisé par des flèches F sur la figure 12, moyennant un effacement élastique temporaire du bord tombé 32.

Cette mise en place peut ainsi se trouver facilitée, notamment lorsque plusieurs brides 18 disposées côte à côte doivent chacune être équipées d'un collier de serrage 30.

Dans la variante de réalisation représentée sur les figures 13, 14, l'extrémité libre du bord tombé 32 est légèrement en retrait par rapport à la paroi de fond 13, en formant avec celle-ci un passage 33, pour faciliter l'introduction du collier de serrage 30.

Mais, conjointement, ce bord tombé 32 se trouve relié à la paroi de fond 13 par un voile 34, qui occulte le passage 33 qu'il forme avec cette paroi de fond 13, et qui est à éliminer pour la libération de ce passage 33.

Comme les voiles 22, ce voile 34 est en saillie sur le bord tombé 32, et, pour en faciliter l'élimination, il est prévu, au moins localement, à sa jonction avec ce bord tombé 32, une rainure de guidage 35.

Préférentiellement, le voile 34 est en continuité avec les voiles 22 présents sur les flancs latéraux 21 de la bride 18.

La bride 18 se trouve ainsi entourée sur trois côtés par des voiles, 22 ou 34, à éliminer pour sa mise en oeuvre.

En variante, le nombre de brides mises en oeuvre est indifférent, et, au lieu d'être présentes en saillie sur la surface interne de la paroi de fond du corps de boîte concerné, cette ou ces brides pourraient tout aussi bien être présentes en saillie sur la surface interne de la paroi latérale de celui-ci.

En outre, le domaine d'application de l'invention ne se limite pas à celui des seuls corps de boîte destinés à former une embase pour un tableau d'abonné, mais s'étend d'une manière plus générale à tous les corps de boîte pour lesquels il est souhaitable de pouvoir disposer intérieurement d'au moins un point d'ancrage.

## Revendications

1. Corps de boîte du genre comportant une paroi de fond (13) et une paroi latérale (14), **caractérisé en ce qu'**il présente, en saillie sur la surface interne de l'une quelconque de ces parois (13, 14), au moins une bride (18), qui est d'un seul tenant avec cette paroi (13, 14), et qui définit avec celle-ci un passage (19), avec, d'une part, dans la paroi (13, 14), au droit de la bride (18), un ajour (20) qui, pour le moulage de cette bride (18), évide localement cette paroi (13, 14), et, d'autre part, sur chacun des flancs latéraux (21) de la bride (18), un voile (22), qui occulte le passage (19) formé par cette bride (18), et qui est à éliminer pour la libération de ce passage (19).

2. Corps de boîte suivant la revendication 1, **caractérisé en ce que** le voile (22) présent sur le flanc latéral (21) de la bride (18) est en saillie sur ce flanc latéral (21).

3. Corps de boîte suivant la revendication 2, **caractérisé en ce que**, à la jonction entre le voile (22) et le flanc latéral (21) de la bride (18) sur lequel il intervient, il est prévu, au moins localement, une rainure de guidage (25), pour faciliter l'élimination de ce voile (22).

4. Corps de boîte suivant la revendication 3, **caractérisé en ce que** la rainure (25) s'étend du côté du voile (22) opposé à la paroi (13, 14) concernée.

5. Corps de boîte suivant l'une quelconque des revendications 3, 4, **caractérisé en ce que** la rainure de guidage (25) est formée, d'une part, par le flanc latéral (21) concerné de la bride (18), et, d'autre part, par un bourrelet (26) que le voile (22) présente en saillie parallèlement à ce flanc latéral (21).

6. Corps de boîte suivant l'une quelconque des revendications 2 à 5, **caractérisé en ce que**, à sa base, le voile (22) est isolé de la paroi (13, 14) concernée par une fente (27).

7. Corps de boîte suivant l'une quelconque des revendications 1 à 6, **caractérisé en ce que**, en forme générale d'arceau, la bride (18) se raccorde à chacune de ses extrémités à la paroi (13, 14) sur laquelle elle fait saillie.

8. Corps de boîte suivant l'une quelconque des revendications 1 à 6, **caractérisé en ce que**, en forme générale de potence, la bride (18) ne se raccorde qu'à l'une de ses extrémités à la paroi (13, 14) sur laquelle elle fait saillie.

9. Corps de boîte suivant la revendication 8, **caractérisé en ce que**, à son extrémité libre, la bride (18) présente un bord tombé (32), qui s'étend en direction de la paroi (13, 14) sur laquelle elle fait saillie.

10. Corps de boîte suivant la revendication 9, **caractérisé en ce que** le bord tombé (32) est relié à la paroi (13, 14) par un voile (34).

11. Corps de boîte suivant la revendication 10, **caractérisé en ce que** le voile (34) reliant le bord tombé (32) de la bride (18) à la paroi (13, 14) est en continuité avec les voiles (22) présents sur les flancs latéraux (21) de cette bride (18).

12. Corps de boîte suivant l'une quelconque des revendication 10, 11, **caractérisé en ce que** le voile (34) reliant le bord tombé (32) de la bride (18) à la paroi (13, 14) est en saillie sur ce bord tombé (32).

13. Corps de boîte suivant la revendication 12, **caractérisé en ce qu'**il est prévu, au moins localement, une rainure de guidage (35) à la jonction du voile (34) avec le bord tombé (32).

14. Corps de boîte suivant l'une quelconque des revendications 1 à 13, **caractérisé en ce que** la paroi (13, 14) présentant en saillie sur sa surface interne la bride (18) est la paroi de fond (13).

15. Corps de boîte suivant l'une quelconque des revendications 1 à 14, **caractérisé en ce qu'**il y a deux brides (18), qui, disposées à distance l'une de l'autre, s'étendent parallèlement l'une à l'autre.

16. Tableau d'abonné du genre comportant un corps de boîte (11), qui en forme l'embase, et une platine (12), qui ferme ce corps de boîte (11) à la manière d'un couvercle, **caractérisé en ce que** le corps de boîte (11) est conforme à l'une quelconque des revendications 1 à 15.

17. Tableau d'abonné suivant la revendication 16, **caractérisé en ce que**, le volume interne du corps de boîte (11) étant fractionné en deux compartiments (15A, 15B) par une cloison interne (16), à savoir un compartiment d'arrivé (15A) et un compartiment de départ (15B), la ou les brides (18) interviennent dans le compartiment d'arrivée (15A).

18. Tableau d'abonné suivant l'une quelconque des revendications 16, 17, **caractérisé en ce qu'**il lui est associé un collier de serrage (30) propre à être engagé dans le passage (19) de la ou des brides (18).

## Claims

1. A box pan of the type comprising a base wall (13) and a side wall (14), **characterized in that** at least one flange (18) projects from the inner surface of any one of said walls (13, 14), said flange being in one piece with said wall (13, 14) and defining therewith a passage (19) having an orifice (20) in the wall (13,14) at right angles with the flange (18) which, for moulding of said flange (18), locally cuts out said wall (13, 14), and having a web (22) on each side flank (21) of the flange (18) which obstructs the passage (19) formed by said flange (18) and which is eliminated to open said passage (19).

2. A box pan according to claim 1, **characterized in that** the web (22) present on the side flank (21) of the flange (18) projects over said side flank (21).

3. A box pan according to claim 2, **characterized in that** a guide groove (25) is at least locally provided at the junction between the web (22) and the side flank (21) of the flange (18) associated therewith, to facilitate elimination of said web (22).

4. A box pan according to claim 3, **characterized in that** the groove (25) extends from the side of the web (22) opposite to the wall (13, 14) concerned.

5. A box pan according to either claim 3 or claim 4, **characterized in that** the guide groove (25) is formed by the side flank (21) concerned of the flange (18) and by a bead (26) projecting from the web (22) parallel to said side flank (21).

6. A box pan according to any one of claims 2 to 5, **characterized in that** at its base, the web (22) is isolated from the wall (13, 14) concerned by a slot (27).

7. A box pan according to any one of claims 1 to 6, **characterized in that** each extremity of the flange (18), in the general form of a bow, is connected to the wall (13, 14) from which it projects.

8. A box pan according to any one of claims 1 to 6, **characterized in that**, in its general operational form, the flange (18) is only connected by one of its ends to the wall (13, 14) from which it projects.

9. A box pan according to claim 8, **characterized in that**, at its free end, the flange (18) has a cutoff edge (32), which extends in the direction of the wall (13, 14) from which it projects.

10. A box pan according to claim 9, **characterized in that** the cutoff edge (32) is connected to the wall (13, 14) via a web (34).

11. A box pan according to claim 10, **characterized in that** the web (34) connecting the cutoff edge (32) of the flange (18) to the wall (13, 14) is continuous with the webs present on the side flanks (21) of said flange (18).

12. A box pan according to either claim 10 or claim 11, **characterized in that** the web (34) connecting the cutoff edge (32) of the flange (18) to the wall (13, 14) projects from said cutoff edge (32).

13. A box pan according to claim 12, **characterized in that** it is at least locally provided with a guide groove (35) at the junction of the web (34) with the cutoff edge (32).

14. A box pan according to any one of claims 1 to 13, **characterized in that** the wall (13, 14) having the flange (18) projecting from its inner surface is the base wall (13).

15. A box pan according to any one of claims 1 to 14, **characterized in that** there are two flanges (18) which extend parallel to each other, disposed at a distance from each other.

16. An electrical panelboard of the type comprising a box pan (11) which forms a base and a plate (12), which closes the box pan (11) in the manner of a cover, **characterized in that** the box pan (11) is in accordance with any one of claims 1 to 15.

17. An electrical panelboard according to claim 16, **characterized in that** the internal volume of the box pan (11) is divided by an internal partition (16) into two compartments (15A, 15B), namely a feed compartment (15A) and an output compartment (15B), the flange or flanges (18) being in the feed compartment (15A).

18. An electrical panelboard according to either claim 16 or claim 17, **characterized in that** it is associated with a tightening band (30) that can be engaged in the passage (19) of the flange or flanges (18).

## Patentansprüche

1. Gehäusekörper, der eine Bodenwand (13) und eine Seitenwand (14) aufweist,
**dadurch gekennzeichnet,**
**dass** er vorstehend auf der Innenfläche einer dieser Wände (13, 14) wenigstens ein Befestigungselement (18) aufweist, welches einstückig mit der Wand (13, 14) ausgebildet ist und mit dieser einen Durchgang (19) bildet, wobei einerseits in der Wand (13, 14) gegenüber dem Befestigungselement (18) ein Durchbruch (20) vorgesehen ist, der zum Gießen des Befestigungselements (18) lokal eine Aussparung in der Wand (13, 14) bildet, und andererseits auf jeder der Seitenflanken (21) des Befestigungselements (18) eine Abdeckung (22) vorgesehen ist, welche den Durchgang (19) verdeckt, der von dem Befestigungselement (18) gebildet ist, und die entfernt werden muss, um den Durchgang (19) freizugeben.

2. Gehäusekörper nach Anspruch 1,
**dadurch gekennzeichnet,**
**dass** die auf der Seitenflanke (21) des Befestigungselements (18) vorhandene Abdeckung (22) über die Seitenflanke (21) vorsteht.

3. Gehäusekörper nach Anspruch 2,
**dadurch gekennzeichnet,**
**dass** an der Nahtstelle zwischen der Abdeckung (22) und der Seitenflanke (21) des Befestigungselements (18), auf dem sie angeordnet ist, zumindest lokal eine Führungsrille (25) vorgesehen ist, um die Entfernung der Abdeckung (22) zu erleichtern.

4. Gehäusekörper nach Anspruch 3,
**dadurch gekennzeichnet,**
**dass** die Rille (25) sich an der der betreffenden Wand (13, 14) gegenüberliegenden Seite der Abdeckung (22) erstreckt.

5. Gehäusekörper nach einem der Ansprüche 3 oder 4,
**dadurch gekennzeichnet,**
**dass** die Führungsrille (25) einerseits von der betreffenden Seitenflanke (21) des Befestigungselements (18) und anderseits von einem parallel zu der Seitenflanke (21) vorstehenden Wulst (26) der Abdeckung (22) gebildet ist.

6. Gehäusekörper nach einem der Ansprüche 2 bis 5,
**dadurch gekennzeichnet,**
**dass** die Abdeckung (22) an ihrer Basis von der betreffenden Wand (13, 14) durch einen Spalt (27) isoliert ist.

7. Gehäusekörper nach einem der Ansprüche 1 bis 6,
**dadurch gekennzeichnet,**
**dass** das Befestigungselement (18) im Wesentlichen bogenförmig ist und an seinen beiden Enden mit der Wand (13, 14) verbunden ist, über die es vorsteht.

8. Gehäusekörper nach einem der Ansprüche 1 bis 6,
**dadurch gekennzeichnet,**
**dass** das Befestigungselement (18) im Wesentlichen galgenförmig ist und nur mit einem seiner Enden mit der Wand (13, 14) verbunden ist, über die es vorsteht.

9. Gehäusekörper nach Anspruch 8,
**dadurch gekennzeichnet,**
**dass** das Befestigungselement (18) an seinem freien Ende einen heruntergezogenen Rand (32) aufweist, der sich in Richtung der Wand (13, 14) erstreckt, über die es vorsteht.

10. Gehäusekörper nach Anspruch 9,
**dadurch gekennzeichnet,**
**dass** der heruntergezogene Rand (32) mit der Wand (13, 14) über eine Abdeckung (34) verbunden ist.

11. Gehäusekörper nach Anspruch 10,
**dadurch gekennzeichnet,**
**dass** die Abdeckung (34), welche den heruntergezogenen Rand (32) des Befestigungselements (18) mit der Wand (13, 14) verbindet, eine Fortsetzung der auf den Seitenflanken (21) des Befestigungselements (18) vorhandenen Abdeckungen (22) bildet.

12. Gehäusekörper nach einem der Ansprüche 10 oder 11,
**dadurch gekennzeichnet,**
**dass** die Abdeckung (34), welche den heruntergezogenen Rand (32) des Befestigungselements (18) mit der Wand (13, 14) verbindet, über den heruntergezogenen Rand (32) vorsteht.

13. Gehäusekörper nach Anspruch 12,
**dadurch gekennzeichnet,**
**dass** an der Nahtstelle zwischen der Abdeckung (34) und dem heruntergezogenen Rand (32) zumindest lokal eine Führungsrille (35) vorgesehen ist.

14. Gehäusekörper nach einem der Ansprüche 1 bis 13,
**dadurch gekennzeichnet,**
**dass** die Wand (13, 14), die auf ihrer Innenfläche vorstehend das Befestigungselement (18) aufweist, die Bodenwand (13) ist.

15. Gehäusekörper nach einem der Ansprüche 1 bis 14,
**dadurch gekennzeichnet,**
**dass** es zwei Befestigungselemente (18) gibt, welche voneinander beabstandet angeordnet sind und sich parallel zueinander erstrecken.

16. Zählertafel, welche einen Gehäusekörper (11) aufweist; der ihren Sockel bildet, und eine Platte (12) aufweist, welche den Gehäusekörper (11) deckelartig schließt,
**dadurch gekennzeichnet,**
**dass** der Gehäusekörper (11) einem der Ansprüche 1 bis 15 entspricht.

17. Zählertafel nach Anspruch 16,
**dadurch gekennzeichnet,**
**dass** der Innenraum des Gehäusekörpers (11) durch eine innere Zwischenwand (16) in zwei Bereiche (15A, 15B) aufgeteilt ist, nämlich einen Eingangsbereich (15A) und einen Ausgangsbereich (15B), wobei das oder die Befestigungselemente (18) sich in dem Eingangsbereich (15A) befinden.

18. Zählertafel nach einem der Ansprüche 16 oder 17,
**dadurch gekennzeichnet,**
**dass** ihr eine Klemmschelle (30) zugeordnet ist, die geeignet ist, in den Durchgang (19) des oder der Befestigungselemente (18) eingesteckt zu werden.
